# EUROPÄISCHE PATENTSCHRIFT

(11) **EP 2 072 201 B1**
(45) Veröffentlichungstag und Bekanntmachung des Hinweises auf die Patenterteilung: **18.01.2012**
(21) Anmeldenummer: 07024386.0
(22) Anmeldetag: 17.12.2007
(51) Int. Cl.: B27D 5/00, B23Q 35/10, B23C 3/12

(54) **Kantentaster**
Edge scanner
Palpeur d'angle

(43) Veröffentlichungstag der Anmeldung: 24.06.2009
(73) Patentinhaber: Brandt Kantentechnik GmbH, 32647 Lemgo (DE)
(72) Erfinder: Nope, Thomas, Dipl.-Ing., 32689 Kalletal (DE)
(74) Vertreter: HOFFMANN EITLE

(56) Entgegenhaltungen:
- EP-A- 1 050 389
- DE-U1-202007 005 499
- SCHAEFFLER GRUPPE INDUSTRIE, INA, FAG: 'Genauigkeitslager für kombinierte Lasten, Einbau- und Wartungsanleitung', MANDELKOW GMBH, GERMANY Seiten 1 - 21 * page 4 - page 4 * * page 15 - page 15 *

## Beschreibung

### Technisches Gebiet

Die vorliegende Erfindung betrifft eine Tastvorrichtung für ein Kantenbearbeitungswerkzeug gemäß dem Oberbegriff von Anspruch 1.

Eine solche Tastvorrichtung ist aus DE 202007005499U1 bekannt.

### Stand der Technik

Eine Tastvorrichtung für ein Kantenbearbeitungswerkzeug gemäß dem Oberbegriff von Anspruch 1 ist bekannt und wird im Folgenden mit Stand der Technik bezeichnet. Der Einsatz einer solchen Tastung erfolgt beispielsweise auf einem Formfräsaggregat in einer Kantenanleimmaschine. Dabei ist eine Tastvorrichtung für ein Kantenbearbeitungswerkzeug im Stand der Technik im Wesentlichen aus den folgenden Elementen aufgebaut: Ein Fräser, der über einen Schaft mit einer Motorwelle verbunden ist, rotiert entsprechend einer vorgegebenen Motordrehzahl. Auf dem Schaft des Fräsers befindet sich eine Lagerung, auf der wiederum eine Nabe drehbar gelagert ist. Diese Nabe ist derart verlängert, dass sie auf der vom Fräser abgewandten Seite in eine Drehmomentstütze mündet. Auf der Nabe wird mit Hilfe eines Sicherungsrings ein Zylinder gegen die Drehmomentstütze montiert. Der auf diese Weise montierte Zylinder dient als Tastrolle und ist auf der Nabe mittels Gleitlagerung drehbar gelagert. In der Drehmomentstütze sind weiter Kunststofflaschen vorgesehen, mit denen verhindert werden soll, dass das zu bearbeitende Werkstück durch die Drehmomentstütze beschädigt wird. Da die Drehmomentstütze im Gegensatz dazu üblicherweise nicht aus Kunststoff gefertigt ist, können die Kunststofflaschen auf verschiedene Art und Weise in die Drehmomentstütze eingeführt und dort befestigt werden.

Beispielsweise werden zwei Kunststofflaschen in die "Flügel" der Drehmomentstütze radial eingeführt und in axialer Richtung von einer Seite bzw. von beiden Seiten durch die "Flügel" begrenzt. Eine Fixierung kann dann mit Hilfe einer oder mehrerer Schrauben vorzugsweise in axialer Richtung erfolgen.

Der Einsatz einer Tastvorrichtung für ein Kantenbearbeitungswerkzeug gemäß dem Stand der Technik war wie folgt: Der Fräser rotiert mit Motordrehzahl, während die Nabe, welche auf dem Schaft des Fräsers gelagert ist, still steht. Die Nabe liegt an einer Leiste am Maschinenständer an, wodurch insgesamt die Nabe und auch der Tastring still stehen. Sobald ein Werkstück in den Bearbeitungsraum gelangt und nachfolgend mit der Tastvorrichtung in Berührung kommt, beginnt die Tastrolle zu rotieren, da sie auf dem Werkstück abrollt. Auf Grund Ihrer Geometrie legt sich die Nabe mit der Drehmomentstütze an das Werkstück an und wird hinterher gezogen. Sobald das Ende des Werkstücks erreicht ist und somit die Bearbeitung beendet wird, wird eine weitere Rotation der Tastrolle durch die Nabe mit Drehmomentstütze verhindert. Eine derartige Tastvorrichtung funktioniert nur, wenn der Basisdurchmesser des Werkzeugs auf den Tastenrolldurchmesser abgestimmt ist und die Tastrolle nicht frei mit der Motordrehzahl rotieren kann.

Die Tastvorrichtung für ein Kantenbearbeitungswerkzeug im Stand der Technik weist eine doppelte Lagerung auf, nämlich die Wälzlagerung der Nabe mit Drehmomentstütze und der Tastrolle auf der Nabe mit Drehmomentstütze. Diese doppelte Lagerung bedingt allerdings unter Umständen auch ein doppeltes Spiel, zumal das äußere Lager ein Gleitlager mit vergleichbar hohem Spiel ist. Eine solche Vorrichtung mit doppelter Lagerung wirkt sich nachteilig auf das Bearbeitungsergebnis aus, wobei hinzukommt, dass ein Gleitlager ein größeres Laufspiel benötigt. Des Weiteren ist ein hoher Montageaufwand beim Zusammenbau eines solchen Fräsers mit Tastung verbunden mit erhöhten Kosten die Folge.

Die Nabe mit Drehmomentstütze ist aus Stahl gefertigt und muss deshalb im Bereich der Drehmomentstütze mit Kunststofflaschen versehen werden, um das Werkstück nicht zu beschädigen. Diese Ausführung erhöht die Komplexität sowie den Montageaufwand einer Tastvorrichtung.

Des Weiteren weißt eine Vorrichtung gemäß dem Stand der Technik an der Nabe mit Drehmomentstütze relativ hohe Kräfte auf, da das Drehmoment zwischen Tastrolle und Nabe mit Drehmomentstütze auf Grund der Gleitlagerung nicht eindeutig festgelegt ist. Somit können sich die Kräfte durch Reibungsunterschiede in der Gleitlagerung erheblich erhöhen. Ein weiterer Nachteil einer Tastvorrichtung für ein Kantenbearbeitungswerkzeug nach dem Stand der Technik ist, dass die verwendeten Einzelbauteile innerhalb einer relativ geringen Toleranz gefertigt werden müssen, um ein akzeptables Bearbeitungsergebnis zu gewährleisten.

Weiterer Stand der Technik ist der DE 20 2007 005 499 U1 sowie der EP 1 050 389 A2 zu entnehmen.

### Darstellung der Erfindung

Aufgabe der vorliegenden Erfindung ist es, eine Tastvorrichtung für ein Kantenbearbeitungswerkzeug bereit zu stellen, welche bei Beibehaltung der Funktionalität einfacher aufgebaut und damit kostengünstiger ist, sowie die zuvor genannten Nachteile durch eine neue Funktionsaufteilung behebt. Des Weiteren soll eine Tastvorrichtung mit einfacherer Montage der Einzelelemente bereitgestellt werden, die wartungsfrei ist und ein gutes Bearbeitungsergebnis sicherstellt.

Diese Aufgabe wird durch eine Tastvorrichtung gelöst, die die Merkmale des Anspruchs 1 aufweist.

Demnach wird eine Tastvorrichtung für ein Kantenbearbeitungswerkzeug zur Bearbeitung von bevorzugt plattenförmigen Werkstücken aus Holz, Holzwerkstoffen, Kunststoffen oder ähnlichen Werkstoffen bereitgestellt. Zur Bearbeitung eines Werkstücks umfasst das Kantenbearbeitungswerkstück einen Fräser, der einen Schaft aufweist, wie er bei Bearbeitungswerkzeugen der genannten Art üblich ist. Auf dem Schaft des Fräsers, der während der Bearbeitung mit einer Bearbeitungsdrehzahl von vorzugsweise 12000 1/min betrieben wird, sitzt mindestens ein Lager, vorzugsweise jedoch zwei. Auf diesem Lager befindet sich eine Nabe mit Taster, die mit Hilfe der mindestens einen Lagerung drehbar gelagert ist. Auf der Nabe wiederum eine Drehmomentstütze angebracht, über die die Nabe mit Taster gegen Drehung abgestützt wird.

Eine Tastvorrichtung für ein Kantenbearbeitungswerkzeug gemäß der vorliegenden Erfindung ist dadurch gekennzeichnet, dass die Drehmomentstütze relativ zur Nabe unter Überwinden eines Drehwiderstands drehbar ist, wobei der genannte Drehwiderstand den des mindestens einen Lagers übersteigt. Dabei ist die Drehmomentstütze im Gegensatz zum Stand der Technik als eigenes Bauteil ausgeführt, während die Nabe gleichzeitig als Tastelement fungiert. Dadurch kommt es gegenüber dem Stand der Technik zu einer neuen Funktionsaufteilung, da bei der vorliegenden Erfindung die Nabe und das Tastelement sowie die Drehmomentstütze jeweils als ein Funktionselement ausgeführt ist.

Gemäß der Erfindung ist die Tastvorrichtung dadurch gekennzeichnet, dass die Drehmomentstütze einen Abschnitt der Nabe radial umgreift. Um die Drehmomentstütze lösbar auf der vom Fräser abgewandten Seite der Nabe axial festzulegen, ist es weiter bevorzugt, einen Sicherungsring zu verwenden. Durch die genannte Verspannung und unter dem alternativen Einsatz von einer oder mehreren zusätzlichen Scheiben ist es möglich, den Drehwiderstand einzustellen.

Während der Bearbeitung ist es bevorzugt, dass das Werkstück auf der auf der Nabe fixierten Lauffläche, die als Tastelement dient, anliegt. Weiter ist es möglich, die Nabe aus einem einzigen Material zu fertigen und zur Erhöhung des Reibwiderstands zumindest teilweise hart zu beschichten. Vorzugsweise wird eine solche Hartbeschichtung im Bereich der genannten Lauffläche Verwendung finden, da diese während der Bearbeitung rollend über das Werkstück geführt wird. Die Fertigung aus einem Material vereinfacht den Herstellungsprozess, was letztlich zu einer Einsparung der Herstellungskosten beiträgt.

Vorzugsweise ist es weiter möglich, die Drehmomentstütze, aus einem relativ weichen Material wie Kunststoff oder zumindest einem kunststoffähnlichen Material auszuführen. Auf diese Weise kann sichergestellt werden, dass das Werkstück während der Bearbeitung nicht beschädigt wird. Die Lagerung, durch die die Nabe auf dem Schaft des Fräsers gelagert ist, ist vorzugsweise als Wälzlagersatz ausgeführt, wobei beispielsweise ein Kugellager, Kegellager, oder Zylinderrollenlager verwendet werden kann. Auch andere Ausführungsformen von Wälzlagern sind denkbar. Wälzlager sind auf die Lebensdauer des Fräsers betrachtet wartungsfrei und bieten eine hohe Genauigkeit, wobei letzteres das Bearbeitungsergebnis positiv beeinflusst.

Bevorzugt wird die beschriebene Tastvorrichtung in einer Holzbearbeitungsmaschine im Durchlauf eingesetzt, allerdings ist die Anwendung nicht hierauf beschränkt. Für eine Einzelwerkstückbearbeitung kann die in Anspruch 1 genannte Vorrichtung ebenfalls verwendet werden. Auch wenn es bevorzugt vorgesehen ist, dass sich das Werkstück relativ zum Fräser bewegt, ist es in anderen Ausführungsformen möglich, den Fräser zu bewegen während das Werkstück stillsteht. Mit anderen Worten ist sowohl eine Bearbeitung im Durchlauf, als auch eine Einzelwerkstückbearbeitung möglich. In weiteren, alternativen Ausführungsformen kann es auch möglich sein, dass sich sowohl Fräser als auch Werkstück gleichzeitig bewegen.

### Kurze Beschreibung der Figuren

Die Erfindung wird nachfolgend anhand eines Ausführungsbeispiels näher erläutert. Dabei zeigen die beigefügten Figuren:
- - Fig. 1: zeigt einen Schnitt einer Tastvorrichtung für ein Kantenbearbeitungswerkzeug gemäß dem Stand der Technik in zusammengesetztem Zustand.
- - Fig. 2: zeigt in isometrischer Darstellung eine Tastvorrichtung für ein Kantenbearbeitungswerkzeug gemäß dem Stand der Technik in zerlegtem Zustand.
- - Fig. 3: zeigt einen Schnitt einer Tastvorrichtung für ein Kantenbearbeitungswerkzeug gemäß einer Ausführungsform der vorliegenden Erfindung in zusammengesetztem Zustand.
- -Fig. 4: zeigt in isometrischer Ansicht eine Tastvorrichtung für ein Kantenbearbeitungswerkzeug gemäß der vorliegenden Erfindung in zerlegtem Zustand.

### Detaillierte Beschreibung der Figuren

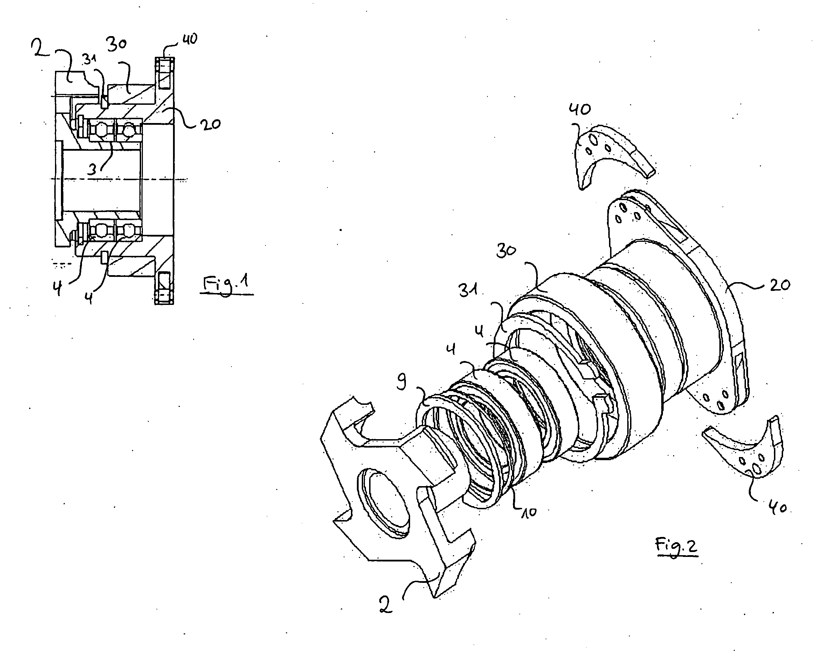

In Fig. 1 und Fig. 2 ist eine Tastvorrichtung für ein Kantenbearbeitungswerkzeug nach dem Stand der Technik zu erkennen, die einen Fräser 2 mit einem Schaft 3 aufweist, auf welchem Schaft 3 eine Nabe mit Drehmomentstütze 20 mit Hilfe mindestens eines Lagers 4 gelagert ist. Dabei wird das mindestens eine Lager auf der Innenseite der Nabe mit Drehmomentstütze 20 mit Hilfe eines inneren Sicherungsrings 9 und einer Scheibe 10 axial gegen einen inneren Absatz der Nabe mit Drehmomentstütze 20 fixiert. Auf der Außenseite der Nabe mit Drehmomentstütze 20 ist eine Tastrolle 30 mit Hilfe eines Sicherungsrings 31 gegen einen äußeren Absatz der Nabe mit Drehmomentstütze 20 gesichert und auf der Nabe mit Drehmomentstütze 20 gleitend gelagert. Es ist ebenfalls denkbar, anstelle des Sicherungsrings eine axial verstellbare Befestigung zu wählen, mit der der Drehwiderstand der Tastrolle 30 gegenüber der Nabe mit Drehmomentstütze 20 einstellbar wäre. Wie in Fig. 1 zu sehen, sind in der Nabe mit Drehmomentstütze 20 Lascheneinsätze 40 vorgesehen, um eine Beschädigung des Werkstücks während der Bearbeitung zu vermeiden.

Beispielsweise werden zwei Lascheneinsätze aus Kunststoff 40 in die "Flügel" der Drehmomentstütze radial eingeführt und in axialer Richtung von einer Seite bzw. von beiden Seiten begrenzt. Eine Fixierung kann dann mit Hilfe einer oder mehrerer Schrauben vorzugsweise in axialer Richtung erfolgen.

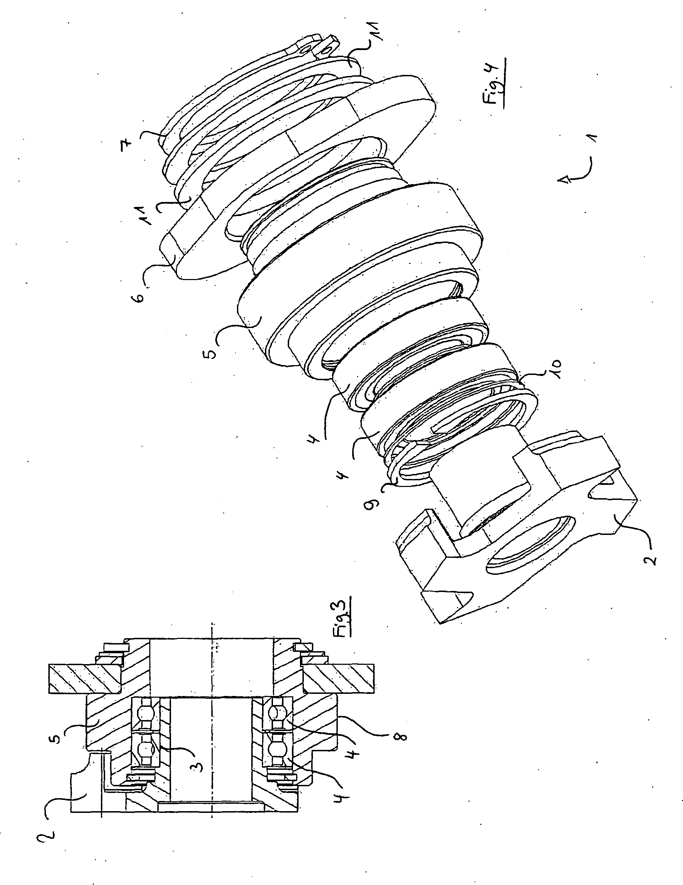

Die Figuren 3 und 4 zeigen eine Ausführungsform einer Tastvorrichtung für ein Kantenbearbeitungswerkzeug gemäß der vorliegenden Erfindung. Dabei ist ein Fräser 2 mit einem Schaft 3 zur Bearbeitung eines Werkstücks zu erkennen. Auf dem Schaft 3 des Fräsers 2 ist mindestens ein Lager 4 - bevorzugt jedoch zwei - vorgesehen, mit Hilfe dessen eine Nabe 5 auf dem Schaft 3 drehbar gelagert ist. Die in Figur 3 abgebildeten Lager 4 sind auf dem Schaft des Fräsers 2 in einer Nut beidseitig axial fixiert, indem der Fräser 2 auf der Fräserwelle (nicht dargestellt) beispielsweise mit Hilfe einer Schraubverbindung auf der Fräserwelle verschraubt wird. Auf der Innenseite der Nabe 5 befindet sich ein innerer Absatz, gegen welchen die Lager 4 beispielsweise mittels eines Sicherungsrings 9, vorzugsweise zusammen mit einer oder mehrerer Scheiben 10, verspannt werden können. Aber auch andere, gängige Befestigungsmethoden können verwendet werden, um die Nabe drehbar gelagert auf dem Schaft des Fräsers in axialer Richtung festzulegen.

Auf der Nabe 5 wiederum ist von der vom Fräser 2 abgewandten Seite eine Drehmomentstütze 6 mit Hilfe eines Sicherungsrings 7 gegen einen äußeren Absatz der Nabe 5, der als Taster fungieren kann, axial festgelegt. Auch hier können andere Befestigungsmethoden verwendet werden, allerdings muss sichergestellt sein, dass die Drehmomentstütze 6 bezüglich der Nabe 5 unter Aufbringen eines definierten Moments drehbar ist. Zur Einstellung des Drehwiderstands der Drehmomentstütze 6 relativ zur Nabe 5 können, falls nötig, entsprechende Scheiben 11 verwendet werden. Alternativ kann die Drehmomentstütze 6 mit Hilfe eines auf der Nabe 5 angeschraubten Flanschs gegen einen Absatz der Nabe 5 festgelegt sein.

Auf der Nabe 5 ist ein Bereich 8 auf dem zuvor genannten äußeren Absatz vorgesehen, in dem die Nabe 5 während der Bearbeitung mit dem Werkstück (nicht dargestellt) in Verbindung steht. Dabei kann der Kontakt zwischen Nabe 5 und Werkstück alternativ auch indirekt erfolgen. Beispielsweise können auf den Bereich 8 eine oder auch mehrere weitere Hülsen aufgepresst, aufgeschraubt oder andersartig in axialer und radialer Richtung festgelegt sein. Mit anderen Worten kann die in der beschriebenen Ausführungsform dargestellte Nabe 5, die einteilig ausgeführt ist, auch in mehrteiliger Ausführung für eine Tastvorrichtung 1 gemäß der vorliegenden Erfindung zum Einsatz kommen.

Der Zusammenbau der Tastvorrichtung gemäß der beschriebenen Ausführungsform der Erfindung erfolgt folgendermaßen: Auf der Nabe wird die Drehmomentstütze 6 von der vom Fräser 2 abgewandten Seite mit Hilfe eines Sicherungsrings 7 in axialer Richtung gegen einen äußeren Absatz der Nabe 5 verspannt, wobei der Drehwiderstand zwischen Drehmomentstütze 6 und Nabe 5 beispielsweise mit Hilfe von Scheiben 11 und oder Federn eingestellt wird. Es kann allerdings in einer alternativen Ausführungsform auch vorgesehen sein, die Drehmomentstütze 6 von der dem Fräser zugewandten Seite gegen einen Absatz der Nabe zu verspannen.

Die Nabe 5, die auf der Innenseite in axialer Richtung eine mittig angeordnete, zylindrische Bohrung aufweist, ist auch auf der Innenseite mit mindestens einem Absatz versehen, so dass das mindestens eine Lager 4 von der Fräserseite her in die zylindrische Bohrung eingeführt werden kann und gegen den inneren Absatz der Nabe 5 beispielsweise mit Hilfe eines Sicherungsrings 9 verspannt werden kann. Zwischen dem Sicherungsring 9 und dem mindestens einen Lager 4 kann eine oder können mehrere Scheiben 10 vorgesehen sein. Der Fachmann wird erkennen, dass zur Verspannung des mindestens einen Lagers 4 innerhalb der Nabe 5 auch andere Mittel verwendet werden können. Auch kann die Nabe 5 beispielsweise mehrteilig ausgeführt sein, um einen inneren Absatz zur Montage des mindestens einen Lagers 4 bereitzustellen.

Die derart montierte Bauteilgruppe, die im Wesentlichen aus der Nabe 5, dem mindestens einen Lager 4 sowie der Drehmomentstütze 6 sowie den Sicherungsringen 7 und 9 und den Scheiben 10 und 11 besteht, wird anschließend in den Bereich der Bearbeitungsmaschine und axial zur Fräserwelle gebracht. Das mindestens eine Lager 4 wird durch Verschrauben des Fräsers 2 auf der Fräserwelle in einer auf dem Schaft des Fräsers 2 vorgesehenen Nut in axialer Richtung verspannt und somit die Nabe auf dem Schaft 3 des Fräsers 2 drehbar gelagert. Derart zusammengeführt ist das Kantenbearbeitungswerkzeug mit der Tastvorrichtung 1 einsatzbereit.

Im Betrieb rotiert der Fräser 2 mit einer bestimmten Drehzahl. Sobald ein Werkstück in den Bearbeitungsraum gelangt und nachfolgend mit der Tastvorrichtung in Berührung kommt, beginnt die Nabe 5 zu rotieren, da sie auf dem Werkstück durch Berührung im Bereich 8 abrollt. Sobald die Nabe auf dem Werkstück rotiert und die Drehmomentstütze am Werkstück anliegt, wird das Drehmoment zwischen der Nabe 5 und der Drehmomentstütze 6 überschritten und die Nabe 5 rollt am Werkstück ab, während die Drehmomentstütze stillsteht, wobei kleinere Bewegungen der Drehmomentstütze im Betrieb durchaus auftreten können.

Auf Grund ihrer Geometrie legt sich die Drehmomentstütze 6 während der Rotation der Nabe an das Werkstück an, wird hinterher gezogen und verhindert damit sicher, auch bei leichtem Abheben des Fräsers, eine Rotation der Nabe mit Fräserdrehzahl. Da die Nabe 5 wälzgelagert ist, ergibt sich ein sehr gutes Bearbeitungsergebnis. Auch wenn eine Wälzlagerung zwischen dem Schaft des Fräsers und der Nabe bevorzugt ist, kann in einer anderen Ausführungsform auch ein Gleitlager verwendet werden.

Sobald die Nabe 5 vom Werkstück angehoben wird, oder sobald die Bearbeitung beendet ist und die Nabe und die Drehmomentstütze 6 nicht mehr mit dem Werkstück in Berührung stehen, verhindert die Drehmomentstütze 6 zuverlässig eine weitere Rotation der Nabe 5.

Auch wenn im vorliegenden Ausführungsbeispiel als Werkzeug ein Fräser bevorzugt ist, so ist in anderen Ausführungsformen auch ein anderes Bearbeitungswerkzeug, wie beispielsweise ein Bohrer, denkbar. Es muss sich dabei nicht zwangsweise um ein spannendes Bearbeitungswerkzeug handeln, auch wenn dies bevorzugt ist.

## Patentansprüche

1. Tastvorrichtung (1) für ein Kantenbearbeitungswerkzeug zur Bearbeitung von bevorzugt plattenförmigen Werkstücken aus Holz, Holzwerkstoffen, Kunststoffen oder ähnlichen Werkstoffen, umfassend:
einen Fräser (2) mit einem Schaft (3),
mindestens ein Lager (4) auf dem Schaft (3) des Fräsers (2),
eine Nabe (5) als Tastelement, die auf dem Schaft (3) mittels des mindestens einen Lagers (4) drehbar gelagert ist, und
eine Drehmomentstütze (6), über die das Tastelement gegen Drehung abgestützt wird,
die Drehmomentstütze (6) relativ zur Nabe (5) unter Überwinden eines Drehwiderstands drehbar ist, der den Drehwiderstand des mindestens einen Lagers (4) übersteigt,
**dadurch gekennzeichnet, dass**
die Drehmomentstütze (6) einen Abschnitt der Nabe (5) radial umgreift.

2. Tastvorrichtung nach Anspruch 1, **dadurch gekennzeichnet, dass** die Drehmomentstütze (6) in axialer Richtung an die Nabe (5) anlegbar ist.

3. Tastvorrichtung nach einem der vorhergehenden Ansprüche, **dadurch gekennzeichnet, dass** die Drehmomentstütze (6) auf der vom Fräser (2) abgewandten Seite der Nabe (5) axial festgelegt ist, bevorzugt lösbar, weiter bevorzugt mit Hilfe eines Sicherungsrings (7).

4. Tastvorrichtung nach einem der vorhergehenden Ansprüche, **dadurch gekennzeichnet, dass** die Drehmomentstütze (6) mit der Nabe (5) verspannt ist, bevorzugt in axialer Richtung, um ihren Drehwiderstand einzustellen.

5. Tastvorrichtung nach einem der vorhergehenden Ansprüche, **dadurch gekennzeichnet, dass** entweder ein Bereich (8) der Nabe selbst oder eine auf der Nabe fixierte Lauffläche als Tastelement dient.

6. Tastvorrichtung nach einem der vorhergehenden Ansprüche, **dadurch gekennzeichnet, dass** die Nabe (5) aus Aluminium besteht und zumindest teilweise hartbeschichtet ist.

7. Tastvorrichtung nach einem der vorhergehenden Ansprüche, **dadurch gekennzeichnet, dass** die Drehmomentstütze (6) dort, wo das Tastelement gegen Drehung abgestützt wird, Kunststoff oder zumindest ein kunststoffähnliches Material aufweist.

8. Tastvorrichtung nach Anspruch 7, **dadurch gekennzeichnet, dass** die Drehmomentstütze (6) aus hauptsächlich einem einzigen Material gefertigt ist und bevorzugt Kunststoff oder zumindest ein kunststoffähnliches Material aufweist.

9. Tastvorrichtung nach einem der vorhergehenden Ansprüche, **dadurch gekennzeichnet, dass** das mindestens eine Lager (4) als Wälzlagersatz ausgeführt ist.

10. Holzbearbeitungsmaschine mit einer Tastvorrichtung nach einem der vorhergehenden Ansprüche, bei der die Bearbeitung im Durchlauf durchgeführt wird.

## Claims

1. Sensing device (1) for an edge-processing tool for processing preferably panel-like workpieces made from wood, derived timber products, plastics or similar materials, comprising:
a milling cutter (2) having a shaft (3),
at least one bearing (4) on the shaft (3) of the milling cutter (2),
a hub (5) as a sensing element which is mounted to be rotatable on the shaft (3) by means of the at least one bearing (4), and
a torque converter bearing (6), via which the sensing element is supported against rotation,
the torque converter bearing (6) can be rotated relative to the hub (5) while overcoming a resistance to rotation which exceeds the resistance to rotation of the at least one bearing (4),
**characterised in that** the torque converter bearing (6) encompasses a section of the hub (5) radially.

2. Sensing device according to claim 1, **characterised in that** the torque converter bearing (6) can be placed on the hub (5) in axial direction.

3. Sensing device according to one of the preceding claims, **characterised in that** the torque converter bearing (6) is fixed axially on the side of the hub (5) facing away from the milling cutter (2), preferably releasably, further preferably with the aid of a retaining ring (7).

4. Sensing device according to one of the preceding claims, **characterised in that** the torque converter bearing (6) is braced to the hub (5), preferably in axial direction to adjust its resistance to rotation.

5. Sensing device according to one of the preceding claims, **characterised in that** either one region (8) of the hub itself or a bearing surface fixed on the hub serves as the sensing element.

6. Sensing device according to one of the preceding claims, **characterised in that** the hub (5) consists of aluminium and is at least partly hard-coated.

7. Sensing device according to one of the preceding claims, **characterised in that** the torque converter bearing (6), where the sensing element is supported against rotation, has plastic or at least a material similar to plastic.

8. Sensing device according to claim 7, **characterised in that** the torque converter bearing (6) is manufactured mainly from a single material and preferably has plastic or at least a material similar to plastic.

9. Sensing device according to one of the preceding claims, **characterised in that** the at least one bearing (4) is made as a roller bearing assembly.

10. Wood processing machine having a sensing device according to one of the preceding claims, in which the processing is carried out continuously.

## Revendications

1. Dispositif palpeur (1) pour un outil d'usinage d'arêtes pour usiner des pièces, de préférence en forme de plaques, en bois, en matériaux dérivés du bois, en matières plastiques ou en d'autres matières analogues, comprenant :
- une fraise (2) avec une tige (3),
- au moins un palier (4) sur la tige (3) de la fraise (2),
- un moyeu (5) comme élément palpeur, lequel est logé de manière à pouvoir tourner sur la tige (3) au moyen du ou des paliers (4), et
- un bras de couple (6), par l'intermédiaire duquel l'élément palpeur est protégé contre toute rotation,
le bras de couple (6) pouvant tourner par rapport au moyeu (5) après avoir surmonté une résistance en rotation qui dépasse la résistance en rotation du ou des paliers (4),
**caractérisé en ce que** le bras de couple (6) entoure radialement un tronçon du moyeu (5).

2. Dispositif palpeur selon la revendication 1, **caractérisé en ce que** le bras de couple (6) peut être placé en direction axiale contre le moyeu (5).

3. Dispositif palpeur selon l'une des revendications précédentes, **caractérisé en ce que** le bras de couple (6) est fixé axialement sur celui des côtés du moyeu (5) qui est à l'opposé de la fraise (2), de préférence de manière amovible, encore de préférence à l'aide d'un circlip (7).

4. Dispositif palpeur selon l'une des revendications précédentes, **caractérisé en ce que** le bras de couple (6) est serré avec le moyeu (5), de préférence en direction axiale, pour régler sa résistance en rotation.

5. Dispositif palpeur selon l'une des revendications précédentes, **caractérisé en ce que** soit une zone (8) du moyeu lui-même soit une surface de roulement fixée sur le moyeu sert d'élément palpeur.

6. Dispositif palpeur selon l'une des revendications précédentes, **caractérisé en ce que** le moyeu (5) est en aluminium et au moins partiellement à revêtement dur.

7. Dispositif palpeur selon l'une des revendications précédentes, **caractérisé en ce que** le bras de couple (6) comporte une matière plastique ou au moins un matériau semblable à une matière plastique là où l'élément palpeur est protégé contre toute rotation.

8. Dispositif palpeur selon la revendication 7, **caractérisé en ce que** le bras de couple (6) est fabriqué principalement en un seul matériau et comporte de préférence une matière plastique ou au moins un matériau semblable à une matière plastique.

9. Dispositif palpeur selon l'une des revendications précédentes, **caractérisé en ce que** le ou les paliers (4) sont conçus comme des ensembles de paliers à roulements.

10. Machine d'usinage du bois avec un dispositif palpeur selon l'une des revendications précédentes, l'usinage étant réalisé en continu.
